# FASCICULE DE BREVET EUROPEEN

(11) **EP 3 086 915 B1**
(45) Date de publication et mention de la délivrance du brevet: **14.11.2018**
(21) Numéro de dépôt: 14833519.3
(22) Date de dépôt: 23.12.2014
(51) Int. Cl.: B29B 11/06, B29C 43/52, B29K 105/04, B29C 44/56, B29L 9/00, B29K 701/00, B29C 43/00, B29C 43/18, B29C 70/08, B29C 70/46

(54) **PROCÉDÉ POUR RÉALISER UNE PIÈCE EN MATIÈRE PLASTIQUE AYANT UNE ÂME EN MOUSSE**
VERFAHREN ZUR HERSTELLUNG EINES KUNSTSTOFFTEILS MIT SCHAUMSTOFFKERN
PROCESS FOR MAKING A PLASTICS PART WITH FOAM CORE

(30) Priorité: 26.12.2013 FR 1363576
(43) Date de publication de la demande: 02.11.2016
(73) Titulaire: Compagnie Plastic Omnium, 69007 Lyon (FR)
(72) Inventeur: PRAT, Jean-François, F-69100 Villeurbanne (FR); GILLE, Denis, F-39370 La Pesse (FR); HERAULT, Richard, F-69740 Genas (FR)
(74) Mandataire: Remy, Vincent Noel Paul
(86) Numéro de dépôt international: PCT/FR2014/053523
(87) Numéro de publication internationale: WO 2015/097403

(56) Documents cités:
- EP-A1- 2 221 161
- WO-A1-2012/016658
- DE-A1-102010 014 398
- FR-A2- 2 175 018
- US-A- 2 659 935
- US-A- 3 246 443
- US-A- 5 173 227
- US-A1- 2004 043 181

## Description

L'invention concerne le domaine technique des procédés de fabrication de pièce en matière plastique. En particulier, l'invention concerne un procédé pour réaliser une pièce en matière plastique ayant une structure en sandwich avec une âme en mousse.

Le document WO2012/016658A1 décrit un procédé pour réaliser une pièce en matière plastique ayant une structure en sandwich dans lequel un insert en mousse est positionné dans un moule entre deux couches de matières fibreuse. Une étape d'injection de résine dans les couches de matière fibreuse est ensuite nécessaire pour obtenir la pièce.

Le document US 2004/0043181A1 montre un procédé similaire dans lequel un matériau moussant est placé entre les couches de matières fibreuse préalablement positionnées dans le moule.

Dans le domaine de l'automobile par exemple, de nombreuses pièces doivent allier résistance mécanique et faible poids. Pour ce faire, il est connu de remplacer des pièces en acier par des pièces en matière plastique.

On connaît différents procédés de moulage de pièce en matière plastique :
- procédé par compression (pour les matières thermodurcissables telle que le SMC) ;
- procédé par thermoformage (compression avec une matière thermoplastique) ;
- procédé par injection (pour les matières thermoplastiques).
- Procédé par transfert de résine (RTM)

Il est connu d'utiliser des matières plastiques renforcées (thermodurcissables ou thermoplastiques). Ces matières sont constituées de fibres de renfort mélangées avec une résine polymère. Ces renforts comportent des fibres de verre ou de carbone par exemple. Ces fibres peuvent être coupées (bouts de fibre de longueur inférieure à 50mm) ou, à l'inverse, continues.

Pour obtenir une performance mécanique accrue sur certaines pièces, il est connu d'utiliser des corps creux. Ces corps creux sont constitués d'une peau supérieure en matière plastique chargée, telle qu'un flanc de SMC, et d'une peau inférieure en matière plastique chargée, telle qu'un flanc de SMC.

Il est également connu de renforcer cette structure en séparant les deux peaux par une âme en mousse. La structure sandwich de SMC améliore la rigidité du produit par rapport au composant conventionnel SMC.

Ces corps creux moussés peuvent être utilisés par exemple pour constituer un plancher de véhicule.

Pour réaliser une pièce en matière plastique ayant une structure en sandwich avec une âme en mousse, on connaît différents procédés.

Un premier procédé consiste à introduire un noyau de mousse entre deux flancs de SMC:
- On réalise le moulage de la première peau ;
- On réalise le moulage de la seconde peau ;
- On insert un noyau de mousse entre les deux peaux ; et
- On assemble les deux peaux par collage ou rivetage.

Un second procédé, appelé « OSS-SMC » (« One Step Sandwich SMC »), permet de réaliser des pièces légères en une seule étape de fabrication. Le procédé comporte les étapes suivantes :
- On dispose une couche de SMC contenant un agent moussant, intercalée entre deux peaux de SMC dans un moule.
- On ferme le moule, provoquant le fluage de la résine du SMC, puis la cuisson des peaux supérieure et inférieure de SMC, le moussage se produit alors en parallèle de cette cuissons ;
- Puis dans un dernier temps, le coeur moussé cuit à son tour (réticulation) ;
- On ouvre le moule, provoquant l'expansion du coeur en SMC contenant un agent moussant ;

Le principal avantage de ce procédé « OSS-SMC » réside dans la réduction des étapes du processus de production (d'où le nom "Un processus par étapes").

Cependant, ce procédé nécessite une formulation spécifique du SMC contenant l'agent moussant, en fonction du type de SMC utilisé pour réaliser les peaux.

De plus, l'apport de chaleur au sein du SMC contenant l'agent moussant est compliquée.

La mousse ainsi obtenue et formant l'âme de la structure en sandwich a une densité autour de 1,0g/cm³. Or il est souvent nécessaire pour alléger davantage la pièce par exemple, d'utiliser des mousses de densité plus faible.

En fonction des contraintes structurelle de la pièce, il est parfois nécessaire d'avoir une épaisseur de mousse importante. Or ceci est obtenu lentement, par expansion, conduisant à des temps de cycle longs (180s-360s).

Enfin, la gestion des bords de la pièce est délicate. En effet, au bord, la peau est réticulée lorsque le SMC moussé s'expanse, impliquant un risque de création de fissures dans les peaux supérieure et inférieure.

L'invention a pour but de remédier à ces inconvénients en fournissant un procédé pour réaliser une pièce en matière plastique ayant une structure en sandwich avec une âme en mousse. Le procédé comporte principalement les étapes suivantes :
- on dispose dans un moule au moins deux feuilles de matière plastique renforcées de fibres ;
- on dispose dans le moule au moins un insert en mousse entre les feuilles de matières plastiques, l'insert en mousse formant une âme structurelle ;
- on ferme le moule, et on applique une pression et une température choisies pour permettre un fluage et une polymérisation de la matière plastique ; et
- on démoule la pièce ainsi obtenue.

Ce procédé permet d'obtenir une pièce une pièce en matière plastique ayant une structure en sandwich avec une âme en mousse, en utilisant tout type de mousse, et en particulier des mousses de faible densité (inférieure à 1,0g/cm³). En particulier aucune étape d'assemblage supplémentaire n'est nécessaire pour assurer la cohésion entre les deux peaux de la structure en sandwich.

De plus, grâce à ce procédé il est possible d'obtenir des pièces ayant un très bon ratio performance mécanique / masse.

Enfin, lors du fluage de la résine, celle-ci pénètre dans les cellules de la mousse, favorisant ainsi la cohésion des couches du sandwich. Il n'y a donc pas besoin d'utiliser une cohérence chimique, et il est donc possible des matériaux non compatibles chimiquement.

Selon un premier mode de réalisation, la matière plastique est apte à poursuivre sa maturation par polymérisation à une pression P, et on utilise une mousse dont la densité est telle qu'à la pression P, la mousse ne subit quasiment pas de déformation, la mousse ayant un plateau de compressibilité sur sa courbe de compressibilité commençant à une pression supérieure à la pression P.

La pression P peut être inférieure à 30MPa et la mousse avoir une densité inférieure à 0,2 g/cm3, ou la pression P peut être supérieure à 40MPa et la mousse avoir une densité supérieure à 0,4 g/cm3.

Selon un second mode de réalisation, la matière plastique est apte à poursuivre sa maturation par polymérisation à une pression P, et on utilise une mousse ayant une courbe de compressibilité possédant un plateau de compressibilité pour une gamme de pressions comprenant la pression P.

On peut alors dimensionner le moule de façon à prendre en compte une variation d'épaisseur de l'insert en mousse une fois le moule ouvert.

Selon un troisième mode de réalisation, la matière plastique est apte à poursuivre sa maturation par polymérisation à une pression P, et on utilise une mousse ayant une courbe de compressibilité possédant un plateau de compressibilité pour une gamme de pressions inférieures à la pression P.

Selon l'invention, on peut chauffer l'insert en mousse avant son introduction dans le moule, ou alors, l'insert en mousse peut être introduit dans le moule à une température inférieure ou égale à la température ambiante.

On peut réaliser un préformage de l'insert en mousse avant de l'introduire dans le moule.

Enfin, selon l'invention, la feuille de matière plastique renforcée peut être constituée d'une résine thermoplastique ou thermodurcissable imprégnant des fibres de renfort.

L'invention sera mieux comprise à la lecture des figures annexées, qui sont fournies à titre d'exemples et ne présentent aucun caractère limitatif, dans lesquelles :
La figure 1 illustre en haut les trois étapes (a) à c)) d'un premier mode de réalisation (de gauche à droite), ainsi que le produit fini (un corps creux moussé) à droite, et en bas, un schéma de la courbe de compressibilité de la mousse utilisée pour ce procédé.
La figure 2 illustre en haut les trois étapes (a) à c)) d'un second mode de réalisation (de gauche à droite), ainsi que le produit fini (un corps creux moussé) à droite, et en bas, un schéma de la courbe de compressibilité de la mousse utilisée pour ce procédé.
La figure 3 illustre en haut les trois étapes (a) à c)) d'un troisième mode de réalisation (de gauche à droite), ainsi que le produit fini (un corps creux moussé) à droite, et en bas, un schéma de la courbe de compressibilité de la mousse utilisée pour ce procédé.

### Description détaillée de l'invention

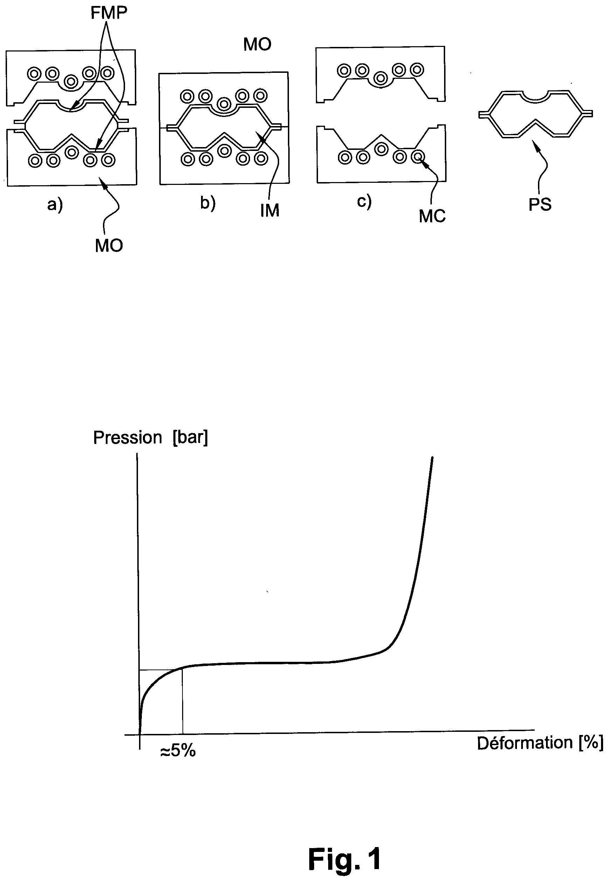

On se réfère maintenant à la figure 1 qui illustre le procédé selon l'invention pour réaliser une pièce en matière plastique ayant une structure en sandwich (PS). Le procédé comporte principalement les étapes suivantes :
- on dispose dans un moule (MO) au moins deux feuilles de matière plastique (FMP) renforcées de fibres ;
- on dispose dans le moule (MO) au moins un insert en mousse (IM) entre les feuilles de matières plastiques (FMP), l'insert en mousse (IM) formant une âme structurelle ;
- on ferme le moule (MO), et on applique une pression et une température (grâce au moyen de chauffage MC) choisies pour permettre un fluage et une polymérisation de la matière plastique ; et
- on démoule la pièce (PS) ainsi obtenue.

Sur les figures 1 à 3, l'étape a) illustre la mise en place des feuilles (FMP) de matière plastique renforcée de fibres et de l'insert en mousse (IM) dans le moule (MO) ; l'étape b) illustre la compression et la cuisson, lorsque le moule est fermé ; l'étape c) illustre l'ouverture et le démoulage de la pièce.

La description de l'invention est faite selon un exemple particulier de réalisation dans lequel les feuilles de matière plastique (FMP) renforcées de fibres sont des flancs de SMC (« Sheet Molding Compound »). Les pré-imprégnés SMC sont des produits semi-finis constitués d'une résine, appelée matrice, imprégnant un renfort (fibre de verres, fibre de carbone, fibres d'aramides...) auxquels peuvent être ajoutés différents adjuvants. Ces pré-imprégnés sont essentiellement utilisés pour les composites à matrices organiques thermodurcissables. Les SMC sont livrés sous forme de feuilles, de rouleaux. Ce semi-produit pré-imprégné est malléable et non collant. Ils finissent de polymériser lors du moulage.

Mais l'utilisation de cette matière n'est nullement limitative, et toutes autres matières plastiques renforcées de fibres pourraient être utilisées. Ainsi la feuille de matière plastique renforcée peut être constituée d'une résine thermoplastique ou thermodurcissable imprégnant des fibres de renfort.

L'âme en mousse est obtenue dans une étape préliminaire.

L'effort de réaction de la mousse en compression assure la pression nécessaire à la bonne transformation de la matière plastique (SMC). La pression de réaction de la mousse est la pression que peut transmettre la mousse aux feuilles de matière plastique.

La transformation du SMC, c'est-à-dire son durcissement par polymérisation (réticulation) s'effectue à une pression, dite pression de transformation. Il s'agit donc de la pression à laquelle la matière plastique est apte à poursuivre sa maturation par polymérisation. Cette pression est une spécificité, une donnée du SMC. Elle dépend de la réaction chimique qui se passe dans la résine, et donc de la formulation de la résine et de la nature de la charge.

De préférence, l'âme en mousse structurelle (IM) a une forme approchante de la géométrie finale de la pièce. Elle peut ainsi subir un préformage avant son introduction dans le moule.

Selon un mode de réalisation, l'insert en mousse (IM) est inséré avec une température inférieure ou égale à la température ambiante dans le moule (MO). Ceci permet d'augmenter la pression de réaction lors de la compression (thermique de la réaction/échange thermique lent avec la mousse)

Selon un autre mode de réalisation, l'insert en mousse (IM) est chauffé avec d'être inséré dans le moule (MO). Ceci permet de déformer de façon irréversible l'insert en mousse (IM) par thermoformage lors de la compression du moule. De plus, ceci peut aider à la réaction de réticulation du SMC, lorsque la pression de réaction de la mousse à cette température est suffisante pour assurer la bonne transformation de la matière plastique.

Pour réaliser une pièce en matière plastique (PS) ayant une structure en sandwich, ayant des performances données, il est nécessaire de réaliser un compromis entre différents paramètres :
- La résistance mécanique de la pièce (comportement en flexion et résistance au choc principalement) ;
- L'encombrement de la pièce (notamment son épaisseur). En effet, selon la destination de la pièce dans le véhicule, l'encombrement peut être limité ; et
- Le poids de la pièce.

La résistance mécanique de la pièce est principalement gouvernée par la qualité des feuilles de matière plastique (FMP) renforcées de fibres. Plus elles sont renforcées, plus elles sont résistantes.

Cependant, plus le taux de renfort est élevé, plus la pression nécessaire à la transformation de la matière plastique est élevée. Cette pression, notée P, est la pression à laquelle la matière plastique est apte à poursuivre sa maturation par polymérisation.

Par exemple, pour un SMC très renforcé, avec un taux de fibre supérieure à 50% en masse par exemple, la pression nécessaire à la transformation de ce SMC est importante : environ 40MPa.

Pour un SMC moins chargé, utilisé sur des pièces nécessitant moins de résistance mécanique, on a généralement une pression nécessaire à la transformation d'environ 30MPa.

Si l'on choisit un SMC fortement renforcé, ayant donc une forte pression de transformation (40MPa), alors on peut choisir deux types de mousse. Soit on utilise une mousse de forte densité, et alors la pièce sera résistante mécaniquement, peu épaisse, mais lourde. Soit on utilise une mousse de plus faible densité, et alors la pièce sera résistante mécaniquement, plus épaisse, mais moins lourde.

Ainsi, selon l'invention, trois variantes du procédé sont envisagées en fonction des contraintes à respecter sur la pièce finie :

### Variante 1 (figure 1)

La matière plastique est apte à poursuivre sa maturation par polymérisation à une pression P.

On utilise une mousse dont la densité est telle qu'à la pression P, la mousse ne subit quasiment pas de déformation, la mousse ayant un plateau de compressibilité sur sa courbe de compressibilité commençant à une pression supérieure à la pression P.

La courbe de compression de la mousse est une courbe représentant la déformation de la mousse (en % de son volume) en fonction de la pression appliquée à la mousse (en bar). Cette courbe présente trois parties :
- une première partie où la mousse ne subit quasiment pas de déformation malgré une augmentation de pression appliquée ;
- un plateau, c'est-à-dire une gamme de déformation pour laquelle la pression appliquée est constante. En d'autre terme, lorsque l'on atteint une certaine pression, la mousse continue de se déformer même si l'on n'augmente pas la pression.
- Un mur de compressibilité de la mousse, c'est-à-dire une gamme de pression appliquée pour laquelle il n'y a quasiment plus de déformation.

Selon cette variante, lors de la fermeture du moule (MO), la mousse se comprime jusqu'à perdre moins de 5% de son volume. L'effort de réaction de la mousse comprime les flancs de SMC à la pression nécessaire pour leur bonne transformation (durcissement par polymérisation). La température est apportée par les parois du moule. Lors de l'ouverture du moule, le SMC réticulé résiste à la pression interne créée par l'expansion de l'insert en mousse (IM). Les densités initiale et finale de la mousse sont les mêmes.

Selon cette variante, si les feuilles de matières plastiques (FMP) sont fortement chargées (pression de transformation supérieure à 40MPa), alors la mousse aura une très forte densité (supérieure à 0,4 g/cm³, et de préférence supérieure à 0,6 g/cm³), entrainant un poids plus élevé pour la pièce (PS). En revanche, la pièce (PS) aura un encombrement limitée pour une résistance mécanique élevée.

Selon cette variante, si les feuilles de matières plastiques (FMP) sont faiblement chargées (pression de transformation inférieure à 30MPa), alors la mousse pourra avoir une faible densité (inférieure à 0,2 g/cm³, et de préférence inférieure à 0,05 g/cm³), entrainant un poids moins élevé pour la pièce (PS).

En revanche, la pièce (PS) aura un encombrement plus important pour une résistance mécanique élevée.

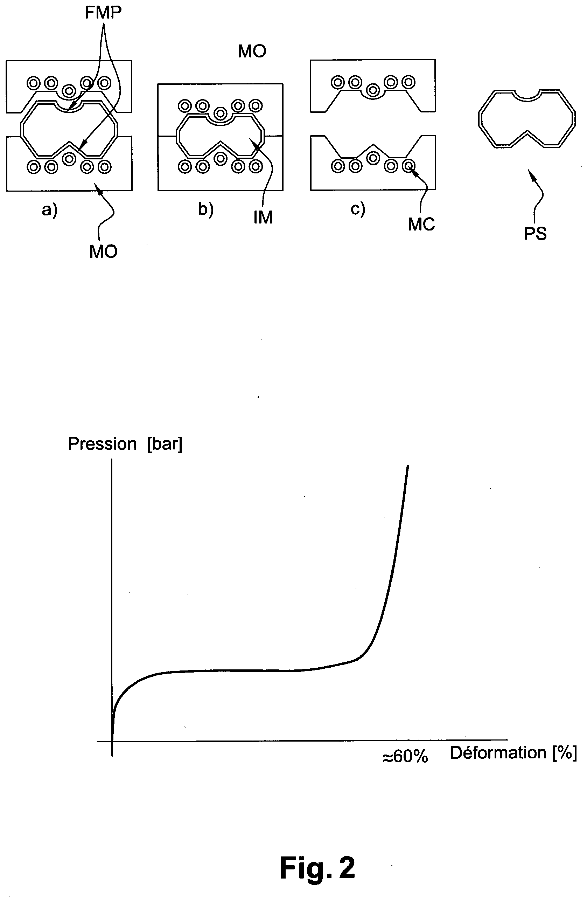

### Variante 2 (figure 2)

La matière plastique est apte à poursuivre sa maturation par polymérisation à une pression P.

On utilise une mousse ayant une courbe de compressibilité possédant un plateau de compressibilité pour une gamme de pressions, la pression P étant comprise dans cette gamme de pressions.

Selon cette variante, lors de la fermeture du moule (MO), la mousse se comprime jusqu'à perdre 60% de son épaisseur. L'effort de réaction de la mousse comprime les flancs de SMC à la pression nécessaire pour leur bonne transformation. La température est apportée par les parois du moule. Lors de l'ouverture du moule, l'insert en mousse retrouve son épaisseur de départ. L'insert en mousse est visible sur la tranche de la pièce. Les densités initiale et finale de la mousse sont les mêmes.

Lors de ce procédé, il est donc nécessaire de maitriser l'outil de moulage dans son dimensionnement pour prendre en compte le gonflement de la pièce. En effet, l'épaisseur de la pièce est une donnée d'entrée à respecter. On utilise donc un moule (MO) qui comprime davantage la structure en sandwich, pour qu'une fois que la mousse ait repris sa forme, la pièce ait la bonne épaisseur.

Ainsi, on dimensionne le moule (MO) de façon à prendre en compte la variation d'épaisseur de l'insert en mousse (IM) une fois le moule ouvert.

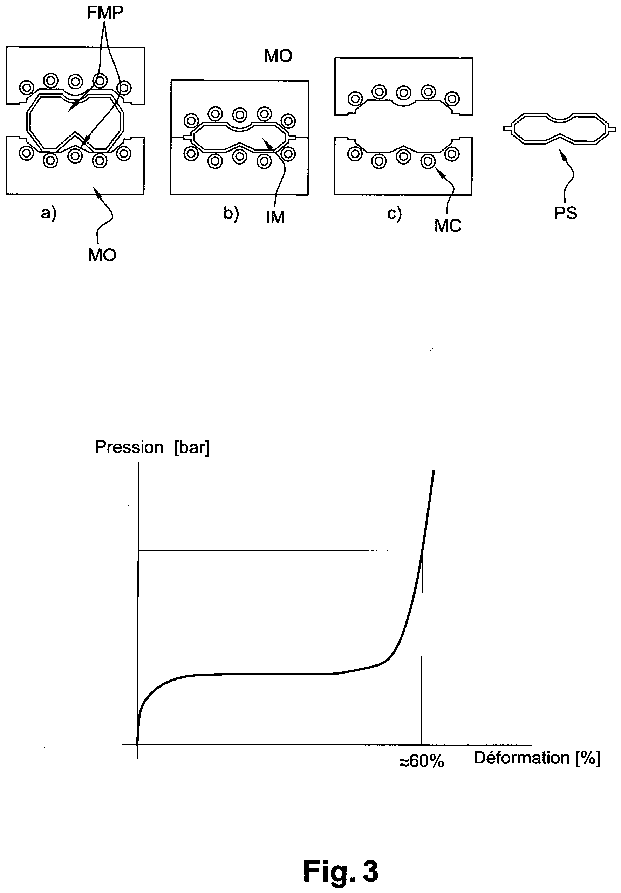

### Variante 3 (figure 3)

La matière plastique est apte à poursuivre sa maturation par polymérisation à une pression P.

On utilise une mousse ayant une courbe de compressibilité possédant un plateau de compressibilité possédant un plateau de compressibilité pour une gamme de pressions inférieures à la pression P : la pression optimale de transformation du SMC est comparable à la valeur de pression du mur de compressibilité de la mousse.

Selon cette variante, lors de la fermeture du moule (MO), la mousse se comprime jusqu'à perdre 60% de son épaisseur. Le SMC flue sur les bords de la pièce pour complètement envelopper l'insert en mousse (IM). A l'ouverture du moule, le SMC est suffisamment solide pour résister à la pression interne créée par l'expansion de l'insert en mousse. La géométrie de l'insert en mousse (IM) comprimé doit être mince sur les bords pour minimiser cette pression.

Selon un mode de réalisation particulier, on préchauffe l'insert en mousse (IM) avant son introduction dans le moule (MO), pour permettre de diminuer la réaction résiduelle (c'est-à-dire le gonflement de la mousse une fois le moule ouvert). La densité de la mousse dans la pièce finie (PS) est plus élevée que la densité initiale de la mousse.

## Revendications

1. Procédé pour réaliser une pièce en matière plastique (PS) ayant une structure en sandwich, dans lequel :
- on dispose dans un moule (MO) au moins deux feuilles de matière plastique (FMP) renforcées de fibres ;
- on dispose dans le moule (MO) au moins un insert en mousse (IM) entre les feuilles de matières plastiques (FMP), l'insert en mousse (IM) formant une âme structurelle ;
- on ferme le moule (MO), et on applique une pression et une température choisies pour permettre un fluage et une polymérisation de la matière plastique ; et
- on démoule la pièce (PS) ainsi obtenue.

2. Procédé selon la revendication 1, dans lequel la matière plastique est apte à poursuivre sa maturation par polymérisation à une pression P, et on utilise une mousse dont la densité est telle qu'à la pression P, la mousse ne subit quasiment pas de déformation, la mousse ayant un plateau de compressibilité sur sa courbe de compressibilité commençant à une pression supérieure à la pression P.

3. Procédé selon la revendication 2, dans lequel la pression P est inférieure à 30MPa, et la mousse a une densité inférieure à 0,2 g/cm³, ou la pression P est supérieure à 40MPa, et la mousse a une densité supérieure à 0,4 g/cm³.

4. Procédé selon la revendication 1, dans lequel la matière plastique est apte à poursuivre sa maturation par polymérisation à une pression P, et on utilise une mousse ayant une courbe de compressibilité possédant un plateau de compressibilité pour une gamme de pressions comprenant la pression P.

5. Procédé selon la revendication 4, dans lequel on dimensionne le moule (MO) de façon à prendre en compte une variation d'épaisseur de l'insert en mousse (IM) une fois le moule ouvert.

6. Procédé selon la revendication 1, dans lequel la matière plastique est apte à poursuivre sa maturation par polymérisation à une pression P, et on utilise une mousse ayant une courbe de compressibilité possédant un plateau de compressibilité pour une gamme de pressions inférieures à la pression P.

7. Procédé selon l'une des revendications précédentes, dans lequel on chauffe l'insert en mousse (IM) avant son introduction dans le moule (MO).

8. Procédé selon l'une des revendications 1 à 6, dans lequel l'insert en mousse (IM) est introduit dans le moule (MO) à une température inférieure ou égale à la température ambiante.

9. Procédé selon l'une des revendications précédentes, dans lequel on réalise un préformage de l'insert en mousse (IM) avant de l'introduire dans le moule (MO).

10. Procédé selon l'une des revendications précédentes, dans lequel la feuille de matière plastique (FMP) renforcée est constituée d'une résine thermoplastique ou thermodurcissable imprégnant des fibres de renfort.

## Patentansprüche

1. Verfahren zum Herstellen eines Teils aus Kunststoff (PS), das eine Sandwichstruktur aufweist, bei dem
- in einem Formwerkzeug (MO) mindestens zwei faserverstärkte Kunststofffolien (FMP) angeordnet werden;
- in dem Formwerkzeug (MO) mindestens eine Einlage aus Schaumstoff (IM) zwischen den Kunststofffolien (FMP) angeordnet wird, wobei die Einlage aus Schaumstoff (IM) einen Strukturkern bildet;
- das Formwerkzeug (MO) geschlossen wird und ein gewählter Druck und eine gewählte Temperatur angewendet werden, um ein Fließen und eine Polymerisation des Kunststoffs zu gestatten; und
- das so erhaltene Teil (PS) entformt wird.

2. Verfahren nach Anspruch 1, bei dem der Kunststoff in der Lage ist, seine Aushärtung durch Polymerisation bei einem Druck P fortzusetzen, und ein Schaumstoff verwendet wird, dessen Dichte dergestalt ist, dass bei dem Druck P der Schaumstoff so gut wie keine Verformung erfährt, wobei der Schaumstoff ein Kompressibilitätsplateau auf seiner Kompressibilitätskurve aufweist, das bei einem Druck beginnt, der größer als der Druck P ist.

3. Verfahren nach Anspruch 2, bei dem der Druck P kleiner als 30 MPa ist und der Schaumstoff eine Dichte kleiner als 0,2 g/cm³ aufweist, oder der Druck P größer als 40 MPa ist und der Schaumstoff eine Dichte größer als 0,4 g/cm³ aufweist.

4. Verfahren nach Anspruch 1, bei dem der Kunststoff in der Lage ist, seine Aushärtung durch Polymerisation bei einem Druck P fortzusetzen, und ein Schaumstoff verwendet wird, der eine Kompressibilitätskurve aufweist, die ein Kompressibilitätsplateau für einen Druckbereich, der den Druck P enthält, besitzt.

5. Verfahren nach Anspruch 4, bei dem das Formwerkzeug (MO) derart dimensioniert wird, dass eine Veränderung der Dicke der Einlage aus Schaumstoff (IM) berücksichtigt wird, sobald die Form geöffnet wird.

6. Verfahren nach Anspruch 1, bei dem der Kunststoff in der Lage ist, seine Aushärtung durch Polymerisation bei einem Druck P fortzusetzen, und ein Schaumstoff verwendet wird, der eine Kompressibilitätskurve aufweist, die ein Kompressibilitätsplateau für einen Bereich von Drücken kleiner als der Druck P besitzt.

7. Verfahren nach einem der vorhergehenden Ansprüche, bei dem die Einlage aus Schaumstoff (IM) vor ihrem Einführen in das Formwerkzeug (MO) erwärmt wird.

8. Verfahren nach einem der Ansprüche 1 bis 6, wobei die Einlage aus Schaumstoff (IM) bei einer Temperatur in das Formwerkzeug (MO) eingeführt wird, die kleiner oder gleich der Umgebungstemperatur ist.

9. Verfahren nach einem der vorhergehenden Ansprüche, bei dem eine Vorverformung der Einlage aus Schaumstoff (IM) erfolgt, bevor sie in das Formwerkzeug (MO) eingeführt wird.

10. Verfahren nach einem der vorhergehenden Ansprüche, bei dem die verstärkte Kunststofffolie (FMP) aus einem thermoplastischen oder thermoplastischen Harz besteht, das Verstärkungsfasern imprägniert.

## Claims

1. Method for producing a plastic part (PS) having a sandwich structure, wherein:
- at least two fibre-reinforced plastic sheets (FMP) are positioned in a mould (MO);
- at least one foam insert (IM) is positioned in the mould (MO) between the plastic sheets (FMP), the foam insert (IM) forming a structural core;
- the mould (MO) is closed, and pressure and temperature chosen to enable the plastic to flow and polymerise are applied; and
- the part (PS) thus obtained is removed from the mould.

2. Method according to claim 1, wherein the plastic can continue its maturing by polymerisation at a pressure P, and a foam whose density is such that at pressure P it undergoes virtually no deformation is used, the foam having a compressibility plateau on its compressibility curve starting at a pressure greater than pressure P.

3. Method according to claim 2, wherein the pressure P is less than 30 MPa and the foam density less than 0.2 g/cm3, or the pressure P is greater than 40 MPa and the foam density greater than 0.4 g/cm3.

4. Method according to claim 1, wherein the plastic can continue its maturing by polymerisation at a pressure P, and a foam whose compressibility curve has a compressibility plateau for a range of pressures including pressure P is used.

5. Method according to claim 4, wherein the mould (MO) is dimensioned to take into account a variation in the thickness of the foam insert (IM) once the mould is opened.

6. Method according to claim 1, wherein the plastic can continue its maturing by polymerisation at a pressure P, and a foam whose compressibility curve has a compressibility plateau for a range of pressures less than pressure P is used.

7. Method according to one of the preceding claims, wherein the foam insert (IM) is heated before it is introduced in the mould (MO).

8. Method according to one of claims 1 to 6, wherein the foam insert (IM) is introduced in the mould (MO) at a temperature less than or equal to ambient temperature.

9. Method according to one of the preceding claims, wherein the foam insert (IM) is preformed before it is introduced in the mould (MO).

10. Method according to one of the preceding claims, wherein the reinforced plastic sheet (FMP) can be made of a thermoplastic or thermosetting resin impregnating the reinforcement fibres.
